# EUROPÄISCHE PATENTSCHRIFT

(11) **EP 0 413 931 B1**
(45) Veröffentlichungstag und Bekanntmachung des Hinweises auf die Patenterteilung: **04.08.1993**
(21) Anmeldenummer: 90112175.6
(22) Anmeldetag: 27.06.1990
(51) Int. Cl.: G07C 5/10

(54) **Bordrechner für ein Kraftfahrzeug**
Motor vehicle trip computer
Calculateur de bord pour véhicules automobiles

(30) Priorität: 24.08.1989 DE 3927921
(43) Veröffentlichungstag der Anmeldung: 27.02.1991
(73) Patentinhaber: Dr.Ing.h.c. F. Porsche Aktiengesellschaft, 70435 Stuttgart (DE)
(72) Erfinder: Ebner, Roland, Dipl.-Ing., D-8057 Eching (DE); Hannig, Dieter, Dipl.-Ing., D-7251 Weissach (DE)

(56) Entgegenhaltungen:
- EP-A- 0 005 436
- EP-A- 0 266 704
- EP-B-00 940 990
- WO-A-88/02122
- DE-A- 3 233 833
- DE-A- 3 320 774
- DE-A- 3 540 599
- DE-A- 3 624 456
- BMW Firmenschrift Kombiinstrument HIGH + LOW Check-Control BC IV, BMW AG Kundendienstschule, Sept. 1987

## Beschreibung

Die Erfindung betrifft einen Bordrechner für ein Kraftfahrzeug nach der Gattung des Hauptanspruchs.

Bordrechner für Kraftfahrzeuge sind häufig mit einem Mikrorechner ausgestattet, der Eingangssignale von analogen oder digitalen Gebern erfaßt und auf einem Anzeigesystem zur Anzeige bringt. Häufig gehören hierzu auch Anzeigetexte oder Anzeigewerte, die in der Sprache bzw. den üblichen Wertedimensionen eines entsprechenden Landes, in das das Kraftfahrzeug geliefert wird, entsprechen sollen.

In diesem Zusammenhang ist es beispielsweise aus der DE 32 33 833A1 bekannt geworden, in einem Programmspeicher des Mikrorechners mehrere Programme zur unterschiedlichen Verarbeitung der Eingangssignale abzuspeichern. Diese willkürlich anwählbaren Programme können über einen zusätzlichen Tastschalter angewählt werden. Im Anzeigesystem des Bordrechners wird dann ein Merkmal abgebildet, das das eingestellte Programm kennzeichnet.

Ebenso ist in VDI-Berichte 612 "Elektronik im Kraftfahrzeug", Tagung/VDI-Gesellschaft Fahrzeugtechnik, Düsseldorf: VDI-Verlag 1986, Baden-Baden, 9./10. Oktober 1986 auf den Seiten 329 bis 345 ein Informationssystem für Fahrzeuge beschrieben, bei dem die Landessprache auszugebender Texte bei der Produktion des Kraftfahrzeugs festgelegt werden kann, in dem ein entsprechender Code in einen nichtflüchtigen Speicherbereich des Informationssystems geladen wird.

Es ergibt sich somit bei beiden Systemen eine gewisse Vereinheitlichung des Informationssystems für verschiedene Lieferländer des Kraftfahrzeugs. Während im ersten Fall ein zusätzlicher Schalter zur Umstellung des Programm- oder Datensatzes notwendig ist, kann bei dem bekannten Informationssystem auf einen derartigen Schalter verzichtet werden. Jedoch wird bei der Produktion die länderspezifische Anzeige ein für allemal festgelegt und ist zu einem späteren Zeitpunkt, beispielsweise wenn das Fahrzeug ins Ausland veräußert werden soll, nicht mehr oder nur mit sehr hohem Aufwand umprogrammierbar.

In der DE- 35 40 599 A1 und in VDI-Berichte "Elektronik im Kraftfahrzeug", Tagung Baden-Baden, 8./9. September 1988, Seiten 315 bis 338 ist ferner ein Bordrechner beschrieben, dessen Anzeigesystem in einem Kombinationsinstrument eines Armaturenbretts eines Kraftfahrzeugs angeordnet ist. Der Bordrechner bildet in Funktion und Anordnung ein Diagnosesystem für mehrere, in das Kraftfahrzeug eingebaute Steuergeräte nach. Der Bordrechner wird hierzu mittels eines Diagnosesteckers in einen Diagnosmodus umgeschaltet. Ein Funktionsumschalter dient zur Anwahl der Anzeigefunktionen im Bordrechnermodus und zur Ablaufsteuerung der Diagnose im Diagnosemodus.

Es ist Aufgabe der Erfindung, einen Bordrechner für ein Kraftfahrzeug zu schaffen, bei dem ein bestimmter Programm- oder Daten- oder Anzeigewert-oder Anzeigedatensatz mit einfachen Mitteln frei auswählbar ist, ohne daß zusätzliche Eingabeelemente am Bordrechner eingesetzt werden müssen oder der Bordrechner neu programmiert werden muß.

Die Erfindung wird durch die kennzeichnenden Merkmale des Anspruchs 1 gelöst. Weitere, die Erfindung in vorteilhafter Weise ausgestaltende Merkmale sind in den Unteransprüchen enthalten. Die Vorteile der Erfindung sind in erster Linie darin zu sehen, daß ohne zusätzliche Eingabeelemente am Bordrechner oder umfangreiche Umprogrammierarbeiten am Bordrechner selbst ein bestimmter Programm- oder Daten- oder Anzeigewert- oder Anzeigedatensatz aus einer Mehrzahl von Sätzen frei auswählbar ist.

Dies wird in erster Linie dadurch erreicht, daß als Tastschalter zur freien Auswahl eines bestimmten, insbesondere länderspezifischen Programm- oder Daten- oder Anzeigewert- oder Anzeigedatensatz der Funktionsumschalter des Bordrechners dient und die Auswahl in einem Diagnosemodus des Bordrechners erfolgt.

Die Erfindung wird anhand von in den Zeichnungen dargestellten Beispielen näher erläutert.
Es zeigt
- Fig. 1: einen Bordrechner innerhalb eines Kombinationsinstruments eines Fahrzeuges mit mehreren, über ein Bussystem angeschlossenen Steuersystemen und einer Diagnose-Steckvorrichtung,
- Fig. 2: eine Darstellung von auf einer Anzeigeeinheit des Bordrechners abbildbaren Schriftzügen.

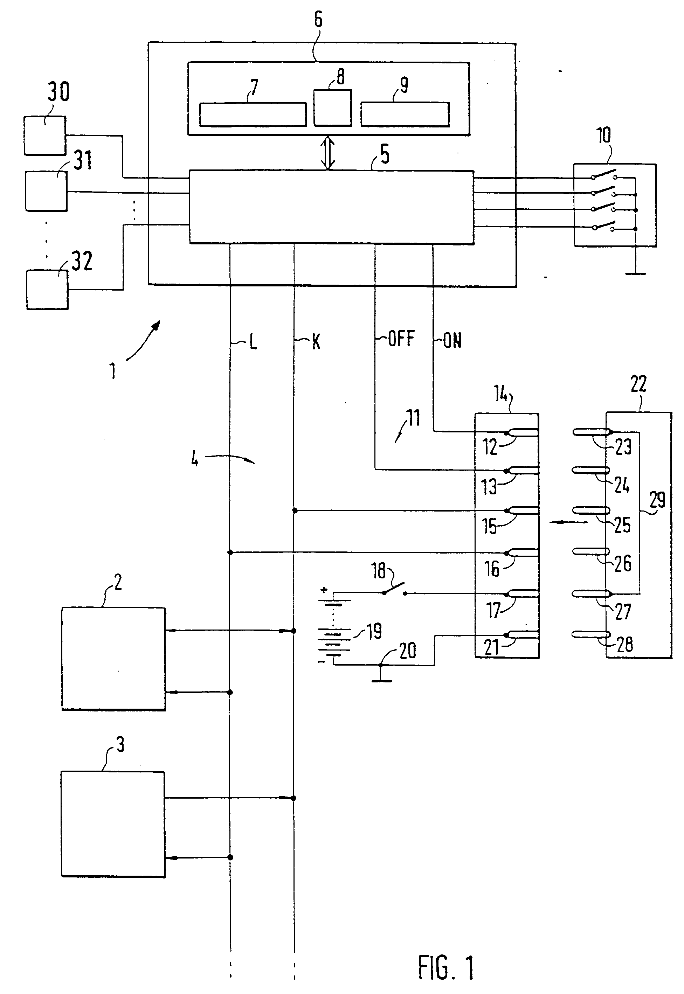

In Fig. 1 ist mit 1 ein Bordrechner eines Kraftfahrzeugs gezeigt, der in Funktion und Anordnung ein Diagnosesystem für mehrere, in ein Kraftfahrzeug eingebaute Steuersysteme, wie z. B. für eine elektronische Krafteinspritzung 2 und ein Antiblockiersystem 3 umfaßt. Diese sind über einen Diagnosebus 4 mit einem Mikrorechner 5 des innerhalb eines Kombinationsinstruments integrierten Bordrechners 1 verbunden.

Ein Anzeigesystem 6 des Bordrechners 1 liegt hierbei vorzugsweise im direkten Sichtbereich des Fahrers. Das Anzeigesystem 6 soll hierbei ein oder mehrere Anzeigeeinheiten 7, 8 und 9 umfassen, auf denen Symbole und/oder alphanumerische Zeichen darstellbar sind. Die Anzeigeeinheiten 7, 8 und 9 dienen hierbei beispielsweise einer elektronischen Wegstreckenzählung 7 sowie Multifunktionsanzeigen (Funktionsanzeige 8 und Datenanzeige 9) des Bordrechners, beispielsweise zur Bestimmung von Fahrdaten, wobei eine Anzeige einer entsprechenden Funktion und zugehöriger Daten außerhalb des Diagnosemodus durch einen mehrere Schaltmöglichkeiten umfassenden Funktionsumschalter 10 vorwählbar ist.

Wie in der DE-OS 35 40 599 oder VDI-Berichte 687 "Elektronik im Kraftfahrzeug", Tagung VDI-Gesellschaft Fahrzeugtechnik. - Düsseldorf VDI-Verlag 1988. Baden-Baden, 8./9. September 1988 auf den Seiten 315 bis 338 beschrieben, ist der Mikrorechner 5 über Steuerleitungen 11 mit Kontaktbuchsen 12 und 13 einer Steckvorrichtung 14 verbunden; über diese ist der Bordrechner 1 mit dem Mikrorechner 5 und dem Anzeigesystem 6 in einen Diagnosemodus überführbar.

Es sind zwei Steuerleitungen 11 vorgesehen, wobei die erste Steuerleitung ON (Kontaktbuchse 12) zum Überführen des Diagnosesystems in eine Fahrzeugeigen-(On-board)-Diagnose und die zweite Steuerleitung OFF (Kontaktbuchse 13) zum Überführen des Diagnosesystems in eine Off-board-Diagnose (Diagnose mittels eines externen Diagnosesystems) dient. An Kontaktbuchsen 15, 16 der Steckvorrichtung 14 ist ferner der Diagnosebus 4 angeschlossen. Schließlich ist noch eine Kontaktbuchse 17 über einen Zündschalter 18 mit einem positiven Pol + einer Batterie 19 verbunden, deren negativer Pol - an einer Fahrzeugmasse 20 und einer Kontaktbuchse 21 der Steckvorrichtung 14 liegt.

Zum Einleiten und Durchführen der On-board-Diagnose, die in den beiden oben genannten Dokumenten näher beschrieben ist, wird in die Steckvorrichtung 14 ein Diagnosestecker 22 eingeführt. Der Diagnosestecker 22 umfaßt Kontaktstifte 23 bis 28, die dabei mit den entsprechenden Kontaktbuchsen 12 bis 13, 15 bis 17 und 21 in elektrisch leitende Verbindung treten. Im Falle der On-board-Diagnose weist der Diagnosestecker 22 lediglich eine Kurzschlußbrücke 29 auf, die die Kontaktstifte 23 und 27 überbrückt. Im eingeführten Zustand verbindet somit der Diagnosestecker 22 die Steuerleitung ON mit dem Pluspol + der Batterie 19, sofern der Zündschalter 18 geschlossen ist. Damit wird das Kombinationsinstrument in den Diagnosemodus überführt.

Zur freien Auswahl eines bestimmten, inbesondere länderspezifischen Programm- oder Daten- oder Anzeigewert- oder Anzeigedatensatz in diesem Diagnosemodus dient nun der Funktionsumschalter 10, mit welchem im Bordrechnermodus die Anzeigefunktionen des Bordrechners 1 angewählt werden und im Diagnosemodus der Diagnoseablauf gesteuert wird. Dies läuft wie folgt ab:
- durch fortwährendes Betätigen einer Schaltmöglichkeit des Funktionsumschalters 10 über einen bestimmten Zeitraum (z. B. für 3 Sek.) hinweg wird nun die Auswahl des Satzes eingeleitet. Hierzu kann beispielsweise die Schaltmöglichkeit dienen, die im Diagnosemodus normalerweise zur Initalisierung eines angewählten Steuersystems bzw. zum Anstoßen der Fehlerausgabe dient.
- Durch kurzzeitiges, erneutes ein- oder mehrmaliges Betätigen dieser Schaltmöglichkeit können ferner die zur Auswahl stehenden Programm- oder Daten- oder Anzeigewert- oder Anzeigedatensätze sequentiell vorgewählt werden. Der vorgewählte Satz kann dann durch Ziehen des Diagnosesteckers oder durch Öffnen des Zündschalters 18 ausgewählt und gespeichert werden.

Zur Ableitung und Darstellung von Anzeigewerten können dem Bordrechner 1 schließlich noch Eingangssignale von analogen oder digitalen Gebern 30 bis 32 zugeführt werden, die Betriebs- oder Fahrdaten des Kraftfahrzeugs erfassen.

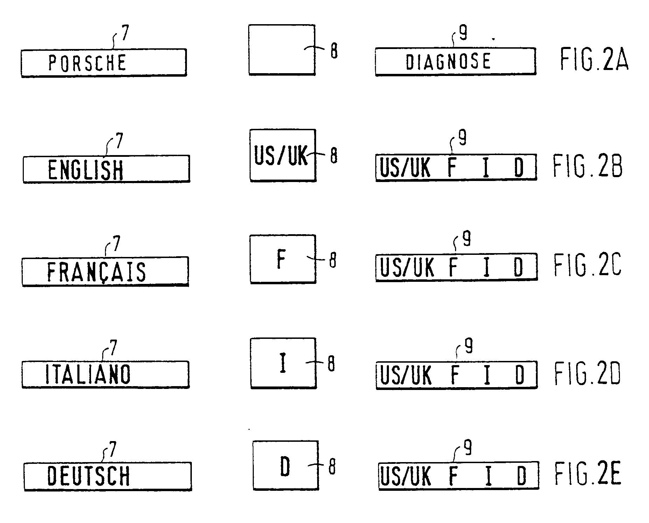

In Fig. 2 sind nun einige, auf den Anzeigen 7, 8 und 9 erscheinenden Anzeigetexte dargestellt. Fig. 2a zeigt das Anzeigesystem nach Aufstecken des Diagnosesteckers 22 auf die Steckvorrichtung 14; es erscheint der Schriftzug (Porsche-Diagnose). Nach fortwährendem Betätigen der Schaltmöglichkeit des Funktionsumschalters 10 über den bestimmten Zeitraum hinweg (beispielsweise für 3 Sek.) erscheint in der Anzeigeeinheit 7 die angewählte Landessprache (beispielsweise Englisch), in der Anzeigeeinheit 8 die Nationalitätskennzeichen (UK, UF) des vorgewählten Satzes und in der Anzeigeeinheit 9 die Nationalitätskennzeichen der wählbaren Sätze (Fig. 2b).

In den weiteren Fig. 2c, 2d und 2e sind noch die Anzeigen gezeigt, wie sie durch kurzzeitiges erneutes ein- oder mehrmaliges Betätigen der Schaltmöglichkeit sequentiell vorgewählt werden können.

Die Auswahl der länderspezifischen Programm- oder Daten- oder Anzeigewert-oder Anzeigedatensätze kann somit ohne zusätzliche Eingabemedien jederzeit von hierzu befugten Personen, beispielsweise in einer Fachwerkstatt erfolgen, indem der Bordrechner des Fahrzeugs durch Aufstecken des Diagnosesteckers in den Diagnosemodus übergeführt wird. Sofern die länderspezifischen Sätze auch die Textausgaben im Diagnosemodus umfassen, ist es hiermit möglich, daß das Servicepersonal einer im Ausland besuchten Werkstatt beispielsweise die Ausgabesprache auf seine Landessprache oder einer ihm verständlichen Sprache zumindest für die Zeitdauer des Werkstattaufenthalts umstellen kann.

## Patentansprüche

1. Bordrechner für ein Kraftfahrzeug mit einem Mikrorechner (5),
- der Eingangssignale von analogen oder digitalen Gebern (30 bis 32) erfaßt und
- daraus abgeleitete Anzeigewerte oder Anzeigedaten auf einem dem Bordrechner (1) zugeordneten, in einem Kombinationsinstrument innerhalb des Armaturenbretts des Kraftfahrzeugs angeordneten Anzeigesystem (6) zur Anzeige bringt,
- der einen Speicher zur Ablage mehrerer Programm- oder Datensätze zur unterschiedlichen Verarbeitung der Eingangssignale oder mehrere Anzeigewert- oder Anzeigedatensätze zur Anzeige von Anzeigewerten oder Anzeigedaten aufweist,
- bei dem ein Tastschalter zur Auswahl eines bestimmten Programm- oder Daten- oder Anzeigewert-oder Anzeigedatensatzes vorgesehen ist,
- der ein Diagnosesystem für mehrere im Kraftfahrzeug eingebaute Steuersysteme (2, 3) beinhaltet,
- wobei die Steuergeräte (2, 3) mit einer Selbstüberwachungsfunktion ausgestattet sind, die Fehlermeldungen in nichtflüchtigen Speichern der Streuergeräte (2, 3) ablegen,
- der von einem Bordrechnermodus zur Anzeige der Anzeigewerte oder Anzeigedaten in einem Diagnosemodus zum Auslesen der Fehlermeldungen aus den Speichern der Steuergeräte (2, 3) umschaltbar ist,
- wobei die Umschaltung durch Aufstecken eines Diagnosesteckers (22) auf eine mit dem Bordrechner (1) verbundene Steckvorrichtung (14) erfolgt und
- der mit einem Funktionsumschalter (10) versehen ist, der im Bordrechnermodus die Anzeigefunktion anwählt und im Diagnosemodus den Diagnoseablaut steuert, dadurch gekennzeichnet,
- daß die Auswahl eines Programm- oder Daten- oder Anzeigewert- oder Anzeigedatensatzes im Diagnosemodus erfolgt und
- durch den Funktionsumschalter (10) vorgenommen wird, wobei
- der vorgewählte Programm- oder Daten- oder Anzeigewert- oder Anzeigedatensatz durch Ziehen des Diagnosesteckers (22) von der Steckvorrichtung (14) ausgewählt und gespeichert wird.

2. Bordrechner nach Anspruch 1, dadurch gekennzeichnet, daß die Auswahl nach Aufstecken des Diagnosesteckers (22) auf die Stellvorrichtung (14) durch fortwährendes Betätigen einer Schaltmöglichkeit des Funktionsumschalters (10) über einen bestimmten Zeitraum hinweg eingeleitet wird und durch kurzzeitiges erneutes ein- oder mehrmaliges Betätigen der Schaltmöglichkeit des Funktionsumschalters (10) die zur Auswahl stehenden Programm- oder Daten- oder Anzeigewert- oder Anzeigedatensätze sequentiell vorgewählt werden können.

3. Bordrechner nach einem der Ansprüche 1 oder 2, dadurch gekennzeichnet, daß der vorgewählte insbesondere länderspezifische Programm- oder Daten- oder Anzeigewert- oder Anzeigedatensatz durch Anzeige der Landessprache in Klartext und /oder des Nationalitätenkennzeichens im Anzeigesystem (6) erfolgt.

## Claims

1. An onboard computer for a motor vehicle with a microcomputer (5),
- which detects input signals from analogue or digital transmitters (30 to 32) and
- displays display values or display data derived therefrom on a display system (6 ) assigned to the onboard computer (1) and arranged in a combined instrument within the dashboard of the motor vehicle,
- which has a memory for depositing several sets of programs or data for the differential processing of the input signals, or several sets of display values or display data for the display thereof,
- in which a push-button is provided for selecting a certain set of programs, data, display values or display data,
- which comprises a diagnostic system for several control systems (2, 3) installed in the motor vehicle,
- the control devices (2, 3) being equipped with a self-test function, which deposits error messages in fixed memories of the control devices (2, 3),
- which can be switched over from an onboard-computer mode for displaying the display values or display data into a diagnostic mode for reading the error messages out of the memories of the control devices (2, 3),
- the switching being carried out by inserting a diagnostic plug (22) into a plug device (14) connected to the onboard computer (1), and
- which is provided with a function switch (10), which selects the display function in the onboard-computer mode and controls the diagnostic process in the diagnostic mode,
characterised in that
- the selection of a set of programs, data, display values or display data takes place in the diagnostic mode, and
- is performed by the function switch (10),
- the preselected set of programs, data, display values or display data being selected and stored by removing the diagnostic plug (22) from the plug device (14).

2. An onboard computer according to Claim 1, characterised in that the selection is initiated once the diagnostic plug (22) has been inserted into the adjusting device (14) by actuating a switching facility of the function switch (10) continuously over a given period of time, and the available sets of programs, data, display values or display data can be preselected sequentially by actuating the switching facility of the function switch (10) again once or repeatedly for a short period of time.

3. An onboard computer according to either one of Claims 1 or 2, characterised in that the preselected set of programs, data, display values or display data, in particular the country-specific set, is displayed in the display system (6) with the national language in clear text and/or the nationality sign.

## Revendications

1. Ordinateur de bord pour un véhicule automobile comportant un micro-ordinateur (5), qui enregistre des signaux d'entrée de capteurs (30 à 32) analogiques ou numériques et qui affiche les valeurs ou données d'affichage, dérivées de ceux-ci, sur un système d'affichage (6), associé à l'ordinateur de bord (1), monté dans un instrument combiné, à l'intérieur du tableau de bord du véhicule automobile et dans une mémoire du micro-ordinateur (5), plusieurs blocs de programmes ou de données sont stockés en vue d'un traitement différencié des signaux d'entrée ou en vue de l'affichage de valeurs ou de données d'affichage parmi différents blocs de valeurs ou de données d'affichage, parmi lesquels un bloc de programmes ou de données ou un bloc de valeurs ou de données d'affichage peut être librement sélectionné à l'aide d'un interrupteur à touche (10), l'ordinateur de bord (1) comprenant un système de diagnostic pour plusieurs systèmes de commande, montés dans un véhicule automobile, tels qu'une injection de carburant (2) électronique, un système antiblocage (3), etc. et l'ordinateur de bord (1) pouvant être commuté, par branchement d'un connecteur de diagnostic (22) sur un dispositif de connexion enfichable (14), relié à l'ordinateur de bord (1), d'un mode ordinateur de bord dans un mode diagnostic, servant à lire des avis de défaut dans des mémoires non volatiles des appareils de commande (2, 3) équipés d'une fonction d'autocontrôle, et l'ordinateur de bord (1) est doté d'un commutateur de fonction (10) sélectionnant au moins des fonctions d'affichage de l'ordinateur de bord dans le mode ordinateur de bord et commandant un diagnostic dans le mode diagnostic, caractérisé en ce que le commutateur de fonction (10) de l'ordinateur de bord sert d'interrupteur à touche pour la libre sélection d'un bloc de programmes ou de données ou d'un bloc de valeurs ou de données d'affichage déterminé, en particulier spécifique au pays et en ce que la sélection s'effectue en mode diagnostic.

2. Ordinateur de bord selon la revendication 1, caractérisé en ce que les blocs de programmes ou de données ou les blocs de valeurs ou de données d'affichage à sélectionner, peuvent être présélectionnés de manière séquentielle, après branchement du connecteur de diagnostic (22) sur le dispositif de connexion enfichable (14), par actionnement continu d'une possibilité de commutation du commutateur de fonction.

3. Ordinateur de bord selon l'une des revendications 1 ou 2, caractérisé en ce que le bloc de programmes ou de données ou le bloc de valeurs ou de données d'affichage présélectionné, en particulier spécifique au pays, s'effectue par affichage de la langue du pays en clair et/ou du symbole du pays dans le système d'affichage (6).
